**Europäisches Patentamt**

**European Patent Office**

**Office européen des brevets**

(11) Veröffentlichungsnummer: **0 685 520 A1**

# EUROPÄISCHE PATENTANMELDUNG

(21) Anmeldenummer: **95108506.7**

(51) Int. Cl.⁶: **C08K 7/02**, C08J 5/08

(22) Anmeldetag: **02.06.95**

(30) Priorität: **03.06.94 DE 4419579**

(43) Veröffentlichungstag der Anmeldung:
**06.12.95 Patentblatt 95/49**

(84) Benannte Vertragsstaaten:
**BE DE FR GB IT NL SE**

(71) Anmelder: **BASF AKTIENGESELLSCHAFT**

**D-67056 Ludwigshafen (DE)**

(72) Erfinder: **Schlarb, Alois, Dr.**
**Am Buhl'chen Park 9**
**D-67146 Deidesheim (DE)**
Erfinder: **Hofmann, Jurgen**
**Muenschenbuschweg 30c**
**D-67069 Ludwigshafen (DE)**
Erfinder: **Ohlig, Hilmar**
**Ländelstrasse 60**
**D-67657 Kaiserslautern (DE)**
Erfinder: **Itteman, Peter, Dr.**
**Sandtorferweg 34**
**D-68623 Lampertheim (DE)**
Erfinder: **Farwerck, Karl-Peter**
**Enzingerstrasse 32**
**D-67551 Worms (DE)**

(74) Vertreter: **Dost, Wolfgang, Dr. rer.nat.,**
**Dipl.-Chem. et al**
**Bardehle, Pagenberg & Partner,**
**Galileiplatz 1**
**D-81679 München (DE)**

(54) **Faserverbundkunststoffmaterial und Verfahren zu dessen Herstellung.**

(57) Bei einem Faserverbundkunststoff aus Kunststoffmasse und Fasern weisen die Fasern eine ausgeprägte Faserlängenverteilung auf, insbesondere liegen über 50 Gew.-% der Fasern außerhalb des Bereichs der Faserlängen von 0,8 * L bis 1,2 * L, wobei L die mittlere (Gewichtsmittel) Faserlänge bedeutet und die mittlere Faserlänge größer ist als die kritische Faserlänge des Systems Kunststoffmasse/Fasern.

EP 0 685 520 A1

Die Erfindung betrifft einen Faserverbundkunststoff und Verfahren zu dessen Herstellung, und insbesondere einen Verbundwerkstoff aus Langfasern und einer Kunststoffmatrix.

Faserverstärkte Pellets (Granulate), insbesondere kurzglasfaserverstärkte Granulate, werden auf Extrudern durch Einarbeiten von Fasern von i.a. 4,5 mm Länge in die Schmelze (hotfeed) hergestellt. Die Dosierung der Fasermenge wird dabei über eine Beschickungsschnecke vorgenommen. Beim Mischen in plastischer Phase treten dann sowohl Zerteil- als auch Verteilvorgänge auf. Ziel ist ein homogenes Extrudat mit einem möglichst engen Spektrum der Faserlängenverteilung und eine mittlere Faserlänge von 200 $\mu$m - 500 $\mu$m. Nach dem Mischen wird die Masse durch eine Lochplatte ausgepreßt. Die so ausgeformten Stränge erstarren bzw. kristallisieren beispielsweise in einem Wasserbad und werden danach in der Granuliereinheit zu Granulat mit 2 - 5 mm Länge zerteilt. Diese Granulate werden für die Herstellung von Formteilen im Spritzgußverfahren eingesetzt.

Der Einsatz dieser Technik zur Herstellung von langfaserverstärkten Pellets scheitert bis heute im wesentlichen aus zwei Gründen:

1. Der in Doppelschneckenextrudern zur Compoundierung eingesetzte Schneckenaufbau verursacht eine Einkürzung der Fasern unter eine Länge von 1 mm.

2. Fasern mit einer Länge von > 500 $\mu$m drücken sich nach der Düse radial aus dem Strang heraus und machen eine störungsfreie Granulierung und Weiterverarbeitung zum Beispiel in Spritzgußmaschinen unmöglich.

Langfasergranulate werden heute nach vier unterschiedlichen Verfahren hergestellt:

1. In-situ-Polymerisation

2. Pulverimprägnierung

3. Schmelzeummantelung

4. Schmelzeimprägnierung

Die ersten beiden Methoden umgehen die Problematik, die Fasern mit einer hochviskosen Schmelze zu benetzen dadurch, daß der Matrixwerkstoff in einer Vorstufe oder als feines Pulver direkt an die Faserfilamente herangetragen wird.

Bei der Schmelzeummantelung wird ein Faserroving durch eine unter Druck stehende, mit Schmelze gefüllte Kammer gezogen und dadurch ummantelt. Dabei werden die inneren Faserfilamente nicht benetzt, so daß eine vollständige Benetzung in einer weiteren Verarbeitungsstufe, z. B. im Spritzguß, stattfinden muß. Bradt hat einen Ummantelungsprozeß im US-Patent 3,042,570 (1962) beschrieben. Er wird heute überwiegend in der Kabelindustrie zur Herstellung von Elektrokabeln eingesetzt.

Langfaserverstärkte Thermoplastgranulate können durch den Einsatz der Pultrusionstechnik hergestellt werden. Diese von Howald und Meyer im US-Patent 2,571,717 (1951) genannte Technik wurde von Cogswell und Hezzel im US-Patent 4,549,920 verfeinert und wird heute industriell für die Herstellung langglasfaserverstärkter Pellets eingesetzt. Bei dem Pultrusionsverfahren können Endlosfasern zusammen mit dem sie umgebenden Kunststoff durch Öffnungen unter Ausbildung von Strängen gezogen werden, die dann zu einem Langfasergranulat geschnitten werden. Resultat ist dabei ein Langfasergranulat mit einer Länge von rund 10 mm für die Spritzgußverarbeitung bzw. bis zu 50 mm für die Plastifizier-/Preßtechnologie. Kennzeichnend für die so hergestellten Pellets ist eine einheitliche Faserlänge, die der Pelletlänge entspricht, und daß die Fasern parallel zur Längsachse der Pellets ausgerichtet sind.

Eine einheitliche Faserlänge kann jedoch bei der Weiterverarbeitung in Spritzguß oder in der Preßverarbeitung Probleme dadurch bereiten, daß wandnahe Fasern durch die Erstarrung der Kunststoffmatrix schon während des Fließvorgangs fixiert werden und sich Domänen unterschiedlichen Fasergehalts ausbilden und dadurch Bauteile mit stark anisotropen Eigenschaften und insbesondere schlechter räumlicher Faserverteilung ausbilden.

Aufgabe der Erfindung ist es daher, ein Kunststoffmaterial aus einer Kunststoffmatrix und verhältnismäßig langen Fasern bereitzustellen, das die genannten Nachteile der bekannten langfaserverstärkten Kunststoffgranulate nicht mehr aufweist. Außerdem soll erfindungsgemäß ein Verfahren zur Herstellung solcher Kunststoffmaterialien angegeben werden, das sowohl preiswert in der Durchführung als auch vielseitig ist. Insbesondere sollen durch Einstellen von Verfahrensparametern und geometrischen Größen die Eigenschaften und geometrischen Größen des erhaltenen Kunststoffmaterials einstellbar sein.

Diese Aufgabe wird durch die in den Ansprüchen definierten Kunststoffmaterialien gelöst, wobei die Unteransprüche bevorzugte Ausführungsformen darstellen. Erfindungsgemäß wird auch ein Verfahren zur Herstellung von Kunststoffmaterialien, wie es in den hierauf gerichteten Ansprüchen definiert ist, bereitgestellt, wobei bevorzugte Varianten des Verfahrens in den entsprechenden Unteransprüchen definiert sind.

Der Erfindung liegt die Idee zugrunde, Langfaserpellets mit breiter Faserverteilung herzustellen und diese Materialien mit einer kostengünstigen, industriell bewährten Imprägniertechnologie, d. h. mittels Extrusionscompoundierung zu fertigen. Die Kunststoffmaterialien sind sowohl zur Herstellung von Fertigteilen im Preßverfahren als auch zur Spritzgußverarbeitung geeignet.

Das bevorzugte Kunststoffmaterial bzw. Langfasergranulat enthält 65 bis 92 Volumenteile Kunststoff, insbesondere Thermoplast, und 35 bis 8 Volumenteile Fasern. Die Fasern weisen keine einheitliche Länge auf, sondern haben vielmehr eine breite Faserlängenverteilung. Die Faserlängen liegen vorzugsweise zwischen 0,1 mm und der Pelletlänge. Die Fasern sind im Pellet nicht streng parallel angeordnet, insbesondere sind sie zufällig verteilt und nicht streng parallel zueinander und nicht alle geradlinig angeordnet.

Bei dem bevorzugten Verfahren zur Herstellung von Langfasergranulaten werden Kunststoff, insbesondere Thermoplast, und Fasern einer Länge von mehr als 3 mm einem Extruder zugeführt und dort vermischt, durch eine Düse ausgeformt und danach in einer Einheit zerteilt oder zunächst segmentiert und dann zerteilt.

Die bevorzugten erfindungsgemäßen Langfaserpellets enthalten 65 bis 92 Volumenteile Kunststoff, insbesondere Thermoplast, und 35 bis 8 Volumenteile Fasern, vorzugsweise 75 bis 87 Volumenteile Kunststoff, insbesondere Thermoplast, und 25 bis 13 Volumenteile Fasern. Als Thermoplaste sind Polyolefine, Styrolpolymere, Polyamide, gesättigte Polyester, Polycarbonate, Polyetherimide, Polyetherketone und Polyethersulfone geeignet. Bevorzugt ist ein Polypropylenhomopolymerisat mit einem MFI zwischen 5 und 500 g/10 min (gemäß DIN 53735) sowie Polypropylen-Pfropfcopolymerisate, z. B. mit Acrylsäure. Als Fasern eignen sich Glasfasern, Kohlenstoffasern, Sisalfasern, Flachsfasern, Kokosfasern und ähnliche Naturfasern. Die Pellets können übliche Zusatzstoffe, wie Stabilisatoren, Füllstoffe, Farbstoffe, Flammschutzmittel und Haftvermittler enthalten.

Bei der Fertigung der Pellets geht man entweder von Endlos-Faserrovings oder von Schnittfasern, die beispielsweise 13,5 mm lang sind, aus. Diese Fasern können nun entweder zusammen mit Thermoplast-Granulat bzw. -Pulver (coldfeed) einem Extruder zugegeben werden oder sie werden in die Thermoplastschmelze (hotfeed) über eine Beschickungsschnecke oder eine Öffnung zugeführt.

Sowohl beim coldfeed als auch stromabwärts (hotfeed) können weitere Additive, z. B. Stabilisatoren, Nukleierungsmittel, Farbstoffe und Füllstoffe zugesetzt werden.

Im Extruder wird der Thermoplast plastifiziert und mit den restlichen Komponenten innig vermischt. Dies wird dadurch erreicht, daß man Ein- oder Mehrwellenextruder, die nach der Faserzugabe stromabwärts nur schwache Spitzenscherfelder ausprägen, vorzugsweise gleichsinnig drehende Zweiwellenextruder, einsetzt. Nach der Extrusion und dem Schneiden des Extrudats weisen die Fasern in den Pellets eine ausgeprägte Längenverteilung auf, wobei die mittlere Faserlänge oberhalb der kritischen Faserlänge der eingesetzten Faser/Kunststoffmatrix-Kombination ist.

Bei dem erfindungsgemäßen Verfahren zur Herstellung des Kunststoffmaterials bzw. der Langfasergranulate erfolgt also zunächst eine Vermischung der Kunststoffmasse mit den Fasern einheitlicher Länge und die Faserlängenverteilung wird signifikant verbreitert durch den Compoundierprozeß. Durch Einstellen der Verfahrensparameter und der geometrischen Bedingungen (Schneckenaufbau) kann die Faserlängenverteilung in weiten Grenzen eingestellt werden.

Die hierin angegebenen Meßgrößen können wie folgt bestimmt werden:

- mittlere Faserlänge [mm]:

$$L_M = \Sigma K_i H_i$$

mit
$L_M$     = mittlere Faserlänge [mm]
$K_i$     = Mittelwert der Faserlängenklasse i
$H_i$     = Häufigkeit in der Faserlängenklasse i

- Faserlängenverteilung:

Die Bestimmung der Faserlängenverteilung gliedert sich in 3 Schritte:
1. Veraschung
2. Fraktionierung
3. Präparation und Bildauswertung
Zu 1.: Die Granulate werden in einem Muffelofen bei 700 °C für 10 min eingelagert. Dabei zersetzt sich die Polymermatrix vollständig und ein Faserhaufwerk bleibt zurück.

Zu 2.: Fraktionierung:

Aufgrund des großen Faserlängenbereichs kann das Faserhaufwerk nicht in einer Fraktion vermessen werden. Das Haufwerk wird deshalb mit Hilfe einer metallischen Siebplatte in unterschiedliche Fraktionen aufgeteilt. Zur Platte: ebene, elektrisch geerdete Messingplatte mit 1 mm Löchern, die im Mittel von ihren Nachbarn 4 mm entfernt sind; eine Zentralzone und ein 20 mm breiter Rand sind lochfrei. Das Faserhaufwerk der Probe wird in der zentralen lochfreien Zone mit Holzstäben vorsichtig zerlegt, so daß die Fasern parallel zur Oberfläche orientiert sind. In diesem Zustand werden sie vorsichtig parallel zur Oberfläche über die Löcher zur Randzone geschoben.

Das Siebverfahren liefert drei Faktoren:

Fraktion I: kleine Fasern (90% < 1 mm) fallen durch die Löcher in ein gläsernes Auffanggefäß.

Fraktion II: Fasern mittlerer Länge (Schwergewicht um 2 - 3 mm) bilden eine Schicht auf der Platte, die nach dem Entfernen von Fraktion III in ein Auffanggefäß geklopft wird.

Fraktion III: längere Fasern (Schwergewicht > 4 mm) bilden beim Hin- und Herbewegen ein leichtes Haufwerk, das sich in der Randzone sammelt und dort mit einer Pinzette in ein Gefäß überführt wird.

Zu 3.: Präparation und Bildauswertung

Jede der drei Fraktionen wird in Paraffinöl gegeben, durch Handschütteln verteilt, auf einen Objektträger oder eine Glasschale aufgebracht und dort gegebenenfalls mit einem Holzstab aufgelokkert.

Die Bilder von Fraktion I werden über Durchlicht-Mikroskopie erzeugt und mittels eines Computers mit entsprechender Software zu einer Längenverteilung von Fraktion I verarbeitet. Die Bilder der Fraktionen II und III werden im Durchlicht von einem Makroobjektiv betrachtet und mittels eines Computers mit entsprechender Software zu den Längenverteilungen der Fraktionen verarbeitet.

Die Verteilungen der Fraktionen werden im Anschluß daran zu einer Faserlängenverteilung der Probe umgerechnet.

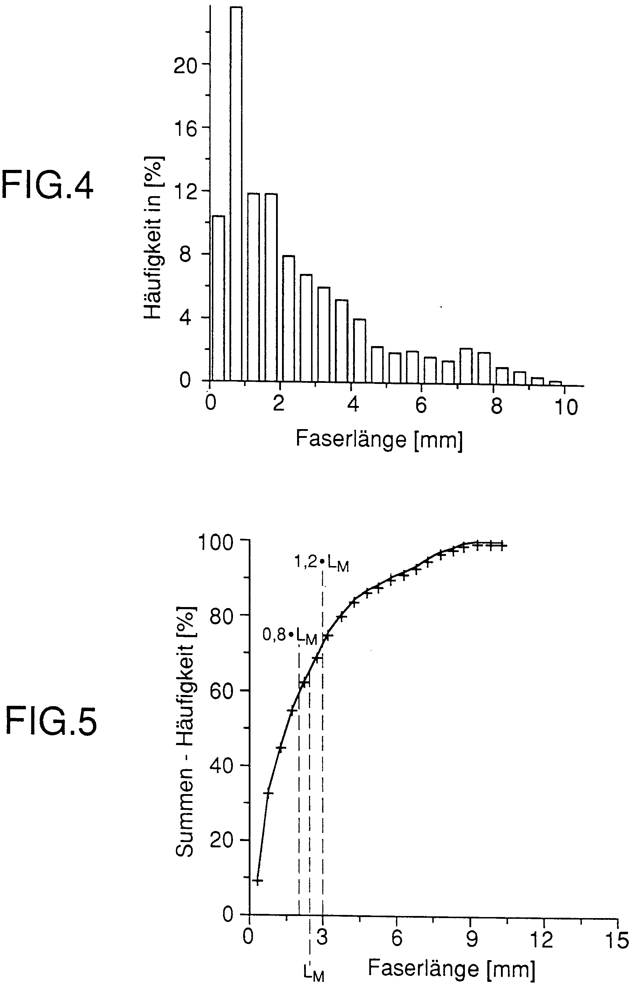

Zwei Beispiele einer Auswertung zur Bestimmung der Faserlängenverteilung ist in den Fig. 4 und 5 gezeigt.

- Kritische Faserlänge:

Formal errechnet sich die kritische Faserlänge zu

$$I_c = \frac{\sigma_{fB} \cdot d_f}{\tau_B \cdot 2}$$

mit

$I_c$ = kritische Faserlänge
$\sigma_{fB}$ = Faserbruchfestigkeit
$d_f$ = Faserdurchmesser
$\tau_B$ = Matrixschubfestigkeit (optimale Haftung)

Für das System Polypropylen/E-Glas

|  |  | Mittelwert | unterer Grenzwert | oberer Grenzwert |
|---|---|---|---|---|
| $\sigma_{fB}$ | MPa | 2400 | 2400 | 2400 |
| $d_f$ | $\mu$m | 14 | 10 | 24 |
| $\tau_B$ | MPa | 14 | 20 | 5 |
| $I_c$ | mm | 1,2 | 0,6 | 5,76 |

Weitere Einzelheiten ergeben sich aus G. W. Ehrenstein "Polymerwerkstoffe", Carl Hansa Verlag München, 1978/1979, Kapitel 6.3.3.2, S. 164 - 172.

Die Matrixschubfestigkeit wird dabei bestimmt nach einem Verfahren, wie es in Polymer Composites, August 1988, Vol. 9 No. 4 p. 245 - 251 beschrieben ist.

- <u>Faservolumen:</u>

Fasergewicht dividiert durch die Dichte des Fasermaterials.

Die Weiterverarbeitung der Pellets kann zum einen in Spritzgußmaschinen erfolgen, so daß Formteile mit einer faserigen Skelettstruktur - und damit einer besseren Spannungsumlagerung - hergestellt werden können.

Zum anderen besteht die Möglichkeit, die Pellets in einer Plastifiziereinheit, z. B. einer Schneckenmaschine oder einem Umluftofen, zu plastifizieren und mittels Preßtechnik zu einem Fertigteil umzupressen.

Die Erfindung wird näher unter Bezugnahme auf die Figuren der Zeichnung erläutert. Es zeigen

Fig. 1          schematisch eine Vorrichtung zur Durchführung des erfindungsgemäßen Verfahrens;

Fig. 1a-d      die in der Vorrichtung gem. Fig 1. eingesetzte Düsenanordnung;

Fig. 2          schematisch eine weitere Vorrichtung zur Durchführung des erfindungsgemäßen Verfahrens;

Fig. 3          schematisch eine dritte Vorrichtung zur Durchführung des erfindungsgemäßen Verfahrens;

Fig. 4          eine graphische Darstellung einer Häufigkeitsverteilung für Faserlängen bei einem erfindungsgemäßen Material;

Fig. 5          eine graphische Darstellung einer aufsummierten (integrierten) Häufigkeitsverteilung für Faserlängen bei einem anderen erfindungsgemäßen Material.

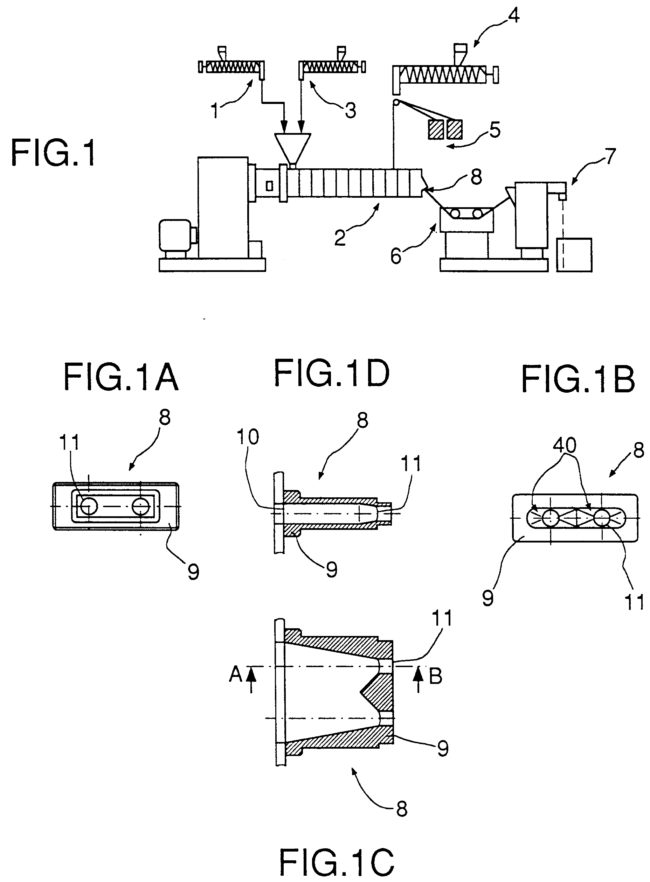

In der in Fig. 1 gezeigten Vorrichtung wird Polymer aus dem Förderer 1 dem Extruder 2 zugeführt. Additive werden über einen entsprechenden Förderer 3 und Schnittglasfasern (Förderer 4) bzw. Endlosglasfaserrovings (Zuführeinrichtung 5 alternativ) dem Extruder 2 zugeführt. Mit Hilfe der speziellen Düsen, wie sie in Fig. 1a-d gezeigt sind, wird in der Vorrichtung ein Material extrudiert und durch ein Wasserbad 6 zu einem Pelletierer 7 geführt, wo Pellets gebildet werden, die die besonderen Faserlängen und Faserlängenverteilungen aufweisen, aber dennoch eine glatte Pelletoberfläche im wesentlichen ohne hervorstehende Faserenden haben.

Die Düsen 8 sind als Zwillingsdüsenelemente 8 ausgebildet. In dem Düsenkörper 9 befinden sich zwei Düsenbohrungen 40, die eine glatte, stufenfreie Oberfläche zwischen Eintrittsöffnung 10 und Extrusionsöffnung 11 haben. Fig. 1a zeigt eine Ansicht der Zwillingsdüse von vorne, Fig. 1b von hinten, also in Strömungsrichtung gesehen. Fig. 1c zeigt eine Querschnittsansicht der Zwillingsdüse 8 mit beiden Extrusionsöffnungen 11, Fig. 1d eine Querschnittsansicht längs der Linie A-B durch die in Fig. 1c gezeigte Düse. Die Neigungswinkel der Düseninnenflächen zur Achse der Extrusionsöffnung bzw. zur Extrusionsrichtung liegt vorzugsweise im Bereich zwischen 0° und 45°, speziell bevorzugt zwischen 0° und 15°.

Allgemein gilt folgendes für diese Ausführungsform der Erfindung:

Bei viskosen Formmassen mit ausgeprägter innerer Strukturviskosität, wie sie bei Formmassen mit hoher Glasfaserfüllung vorliegt, kommt es in Bereichen starker Strömungsänderungen, wie z. B. an Vor- und Rücksprüngen zu Strömungsablösungen und somit zu unkontrolliertem Wandgleiten, bei dem dann die Oberfläche aufgerissen wird und die Glasfasern aus der Oberfläche austreten. Durch das "remembering" der Polymeren setzt sich diese Oberflächenänderung auch in Düsen fort, sie kann an dieser Stelle sogar noch verstärkt werden.

Diesem Effekt kann man erfindungsgemäß begegnen, indem die Ausformeinrichtung (Düsenleiste) so ausgebildet ist, daß möglichst keine Strömungsabrisse auftreten. Dies erzielt man dadurch, daß die Einzugswinkel zu den Düsenlöchern zwischen 0 Grad und 45 Grad gewählt werden, vorzugsweise zwischen 0 Grad und 15 Grad. Bei kurzen Abständen, wie sie zwischen den Düsenlöchern gegeben sind, kann ein Winkel bis zu 45 Grad gewählt werden. Bei höheren Strömungsgeschwindigkeiten durch die Düsenlöcher (> 20 kg/h) ist auch an dieser Stelle ein steilerer Winkel (< 45 Grad) zu wählen.

Dabei ist darauf zu achten, daß nicht nur die Düsenleiste, sondern der gesamte Düsenkopf nach diesen Vorgaben ausgeführt ist, oder zumindest die Einlaufstrecke mit den erfindungsgemäß angegebenen Winkeln zu den Düsenlöchern einen Wert von 3 : 1 übersteigt, wobei dieser Wert als Verhältnis der Einlaufstrecke zum Düsendurchmesser zu sehen ist.

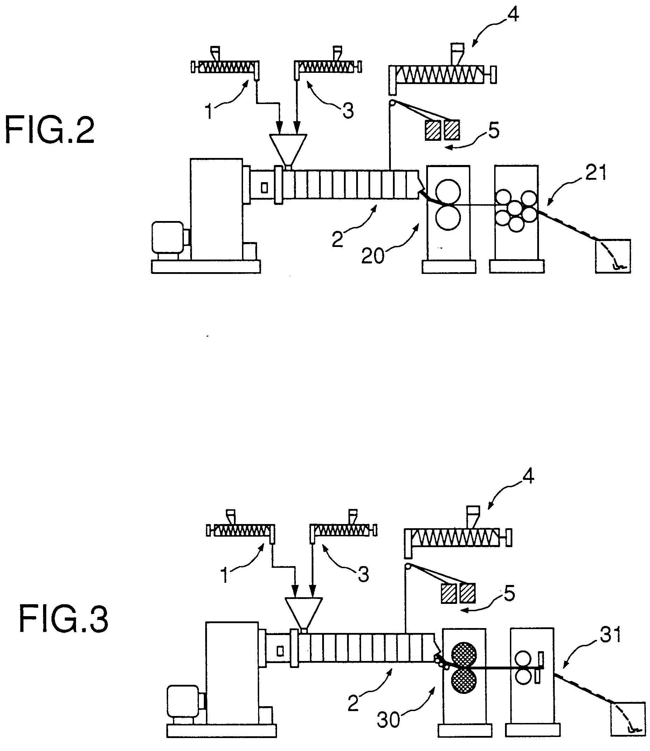

In Fig. 2 ist eine weitere Vorrichtung dargestellt, mit der die erfindungsgemäßen Pellets hergestellt werden können. Bei dieser Vorrichtung erfolgt die Pelletierung mit Hilfe einer Segmentiereinheit 20 und einer Schneideeinheit 21. Die Segmentiereinheit weist eine Vorrichtung zum Prägen der Pellets auf. Dabei werden glatte Pelletoberflächen im wesentlichen ohne hervorstehende Faserenden durch mechanischen Preßkontakt mit formgebenden Oberflächen bei der Formgebung erzielt.

Bei der in Fig. 3 gezeigten Vorrichtung wird ein extrudiertes Band aus dem Kunststoffmaterial mit den Fasern der beschriebenen Faserlängenverteilung extrudiert und mit Hilfe eines Glättwerks 30 geglättet. Das so geglättete Extrudat weist ebenfalls im wesentlichen keine aus der Oberfläche hervorstehende Faserenden auf. Das geglättete Material wird dann in einem Bandgranulator 31 zu Pellets granuliert.

Die Erfindung wird nun anhand von Beispielen, die bevorzugte Ausführungsformen beschreiben, erläutert.

Beispiel 1:

Einem gleichsinnig drehenden Zweiwellenextruder (Hersteller Werner & Pfleiderer, Stuttgart, Typ ZSK 40) wurde Polypropylen-Granulat, Kopplungsmittel und Farbadditive mit einem Massestrom von 21 kg/h zugeführt und bei 220 °C mit stromabwärts zugeführten geschnittenen Textilglasfasern mit einer Fadenfeinheit von 300 Tex und einer Länge von 13,5 mm vermischt, durch eine Breitschlitzdüse ausgetragen, in einer Segmentiereinheit segmentiert und danach durch Zerteilen zu Pellets von 20 mm Länge und 5 mm Durchmesser in einer Schneideeinheit im Prinzip wie in Fig. 2 gezeigt pelletiert. Fasergehalt und Faserlängenverteilung wurden nach dem Veraschen einzelner Pellets in einem Muffelofen bestimmt. Die Pellets haben einen Fasergehalt von 30 Gew.-%. Die Faserlängen betragen bis zu 10 mm; die mittlere Faserlänge liegt bei 2,46 mm (Gewichtsmittel).

Beispiel 2:

Einem gleichsinnig drehenden Zweiwellenextruder (Hersteller Werner & Pfleiderer, Stuttgart, Typ ZSK 40) wurde Polypropylen-Granulat, Kopplungsmittel und Farbadditive mit einem Massestrom von 21 kg/h zugeführt und bei 220 °C mit stromabwärts zugeführten Glasfaserrovings mit einer Fadenfeinheit von 2400 Tex vermischt, durch eine Breitschlitzdüse ausgetragen, in einem Glättwerk geglättet, abgekühlt und danach durch Zerteilen in einem Bandgranulator im Prinzip wie in Fig. 3 gezeigt zu Pellets von 20 mm Länge und 5 mm Durchmesser pelletiert. Fasergehalt und Faserlängenverteilung wurden nach dem Veraschen einzelner Pellets in einem Muffelofen bestimmt. Die Pellets haben einen Fasergehalt von 30 Gew.-%. Die Faserlängen betragen bis zu 16 mm; die mittlere Faserlänge liegt bei 2,15 mm (Gewichtsmittel).

Beispiel 3:

Einem gleichsinnig drehenden Zweiwellenextruder (Hersteller Werner & Pfleiderer, Stuttgart, Typ ZSK 40) wurde Polypropylen-Granulat, Kopplungsmittel und Farbadditive mit einem Massestrom von 21 kg/h zugeführt und bei 220 °C mit stromabwärts zugeführten Schnittglasfasern mit einer Fadenfeinheit von 300 Tex und einer Länge von 4,5 mm vermischt, durch zwei Runddüsen, wie sie in Fig. 1a-d gezeigt sind, ausgetragen und in einer Granuliereinrichtung wie in Fig. 1 gezeigt pelletiert. Die Pellets haben eine Länge von 5 mm und einen mittleren Durchmesser von 4 mm. Fasergehalt und Faserlängenverteilung wurden nach dem Veraschen einzelner Pellets in einem Muffelofen bestimmt. Die Pellets haben einen Fasergehalt von 30 Gew.-%. Die Faserlängen betragen bis zu 4,5 mm; die mittlere Faserlänge liegt bei 2,05 mm (Gewichtsmittel).

## Patentansprüche

1.  Faserverbundkunststoff, der Kunststoffmasse und Fasern enthält,
    dadurch gekennzeichnet, daß
    die Fasern eine ausgeprägte Faserlängenverteilung aufweisen, insbesondere daß über 50 Gew.-% der Fasern außerhalb des Bereichs der Faserlängen von 0,8 * L bis 1,2 * L liegen, wobei L die mittlere (Gewichtsmittel) Faserlänge bedeutet, und daß die mittlere Faserlänge größer ist als die kritische Faserlänge des Systems Kunststoffmasse/Fasern.

2.  Faserverbundkunststoff nach Anspruch 1, gekennzeichnet durch
    65 bis 92 Volumenteile Kunststoffmasse,
    35 bis 8 Volumenteile Fasern,
    vorzugsweise
    75 bis 87 Volumenteile Kunststoffmasse,
    25 bis 13 Volumenteile Fasern.

3.  Faserverbundkunststoff nach einem der vorhergehenden Ansprüche, dadurch gekennzeichnet, daß die Kunststoffmasse eine thermoplastische Kunststoffmasse ist.

6

**4.** Faserverbundkunststoff nach einem der vorhergehenden Ansprüche, dadurch gekennzeichnet, daß die Kunststoffmasse einen oder mehrere der folgenden Kunststoffe enthält:
Polyolefine
Styrolpolymere
Polyamide
Polyetherketone
Polysulfone,
vorzugsweise ein Propylenpolymer mit dem Hauptbestandteil an isotaktischem Polypropylen.

**5.** Faserverbundkunststoff nach einem der vorhergehenden Ansprüche, dadurch gekennzeichnet, daß die Fasern eine oder mehrere der folgenden Fasern sind:
Glasfasern
Kohlenstoffasern
Naturfasern, insbesondere
    Sisalfasern
    Flachsfasern.

**6.** Faserverbundkunststoff nach einem der vorhergehenden Ansprüche, dadurch gekennzeichnet, daß die Fasern eine mittlere Faserlänge L von mehr als 1 mm und vorzugsweise weniger als 25 mm haben.

**7.** Faserverbundkunststoff nach einem der vorhergehenden Ansprüche, dadurch gekennzeichnet, daß die Fasern einen Filamentdurchmesser von 7 bis 300 $\mu$m haben, wobei sich der Filamentdurchmesserbereich bei 7 $\mu$m insbesondere auf Kohlenstoffasern und derjenige bei 300 $\mu$m insbesondere auf Naturfasern bezieht, und wobei Glasfasern vorzugsweise einen Filamentdurchmesser bis 20 $\mu$m, insbesondere 10 bis 20 $\mu$m, haben.

**8.** Faserverbundkunststoff nach einem der vorhergehenden Ansprüche, dadurch gekennzeichnet, daß er aus Pellets, vorzugsweise durch Extrusion und Schneiden entstandene Pellets, insbesondere solche mit einer Pelletlänge von 5 bis 25 mm besteht.

**9.** Verfahren zur Herstellung eines Faserverbundkunststoffs, der Kunststoffmasse und Fasern enthält, dadurch gekennzeichnet, daß
ein erstes Kunststoffmaterial, das zumindest eine erste Masse von Fasern einer im wesentlichen einheitlichen Faserlänge und eine Kunststoffmasse enthält, einer mechanischen Belastung, vorzugsweise in einem Extruder, insbesondere einem Schneckenextruder, derart unterzogen wird, daß ein zweites Kunststoffmaterial entsteht, das die Kunststoffmasse und eine zweite Masse von Fasern aufweist, wobei diese zweite Masse von Fasern eine ausgeprägte Faserlängenverteilung aufweist, insbesondere daß über 50 Gew.-% der Fasern außerhalb des Bereichs der Faserlängen von 0,8 * L bis 1,2 * L liegen, wobei L die mittlere (Gewichtsmittel) Faserlänge bedeutet, und daß die mittlere Faserlänge größer ist als die kritische Faserlänge des Systems Kunststoffmasse/Fasern.

**10.** Verfahren nach Anspruch 9, dadurch gekennzeichnet, daß das zweite Kunststoffmaterial zu Pellets verarbeitet wird, vorzugsweise durch eine der drei folgenden Arbeitsverfahren:
a. Das zweite Kunststoffmaterial wird im plastisch verformbaren Zustand, vorzugsweise im schmelzerweichten Zustand, durch formgebende Werkzeuge, insbesondere Extruder und/oder Kalander, zu einem platten- bzw. streifenförmigen Material mit einer Oberfläche, die im wesentlichen frei von hervorstehenden Fasern ist, geformt und anschließend granuliert, vorzugsweise bandgranuliert;
b. Das zweite Kunststoffmaterial wird im plastisch verformbaren Zustand zu Teilchen verpreßt, vorzugsweise durch einen profilierten Kalander oder eine Tablettenpresse;
c. Das zweite Kunststoffmaterial wird durch eine oder mehrere Düsenkanäle zu Strängen extrudiert, die langgestreckt und schlank und im wesentlichen glatt von einer Düsenkanaleinlaßseite zu einer Düsenkanalauslaßseite verlaufen, und die Stränge werden granuliert.

**11.** Verfahren nach einem der vorhergehenden auf ein Verfahren zur Herstellung eines Faserverbundkunststoffs gerichteten Ansprüche, dadurch gekennzeichnet, daß die im wesentlichen einheitliche Länge der Fasern mindestens 2 mm beträgt und die eingesetzten Fasern vorzugsweise 2 bis 50 mm lang sind, und insbesondere von Endlosfasern stammen.

**12.** Verfahren nach einem der vorhergehenden auf ein Verfahren zur Herstellung eines Faserverbundkunststoffs gerichteten Ansprüche, dadurch gekennzeichnet, daß die Fasern als Endlosfasern, insbesondere als Endlosglasfaserrovings, dem Extruder zugeführt werden.

**13.** Verfahren nach einem der auf ein Verfahren zur Herstellung eines Faserverbundkunststoffs gerichteten Ansprüche, dadurch gekennzeichnet, daß Kunststoffe und Fasern eingesetzt werden, wie sie in den auf Kunststoffmaterialien gerichteten Ansprüchen definiert sind.

**14.** Verwendung eines Faserverbundkunststoffs nach einem der auf Faserverbundkunststoffe gerichteten Ansprüche oder hergestellt nach einem der auf ein Verfahren zur Herstellung eines Faserverbundkunststoffs gerichteten Ansprüche zum Herstellen von Formteilen durch Spritzgießen oder Pressen des Faserverbundkunststoffs im plastisch verformbaren, vorzugsweise schmelz-erweichten Zustand.

FIG.1

FIG.1A

FIG.1D

FIG.1B

FIG.1C

FIG.2

FIG.3

FIG.4

FIG.5

Europäisches Patentamt

EUROPÄISCHER RECHERCHENBERICHT

Nummer der Anmeldung

EP 95 10 8506

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 086 715 (SAINT GOBAIN ISOVER) 24.August 1983 <br> * Seite 3, Zeile 6 - Zeile 18 * <br> * Anspruch 1 * <br> --- | 1-7 | C08K7/02 <br> C08J5/08 |
| A | US-A-4 980 232 (PREVORSEK DUSAN C ET AL) 25.Dezember 1990 <br> * Spalte 3, Zeile 46 - Zeile 58 * <br> * Spalte 21; Beispiel 8 * <br> * Ansprüche 1,2 * <br> --- | 1-7 | |
| A | DATABASE WPI <br> Derwent Publications Ltd., London, GB; <br> AN 81-95963d <br> & JP-A-56 147 845 (TOYOBO KK) , <br> 17.November 1981 <br> * Zusammenfassung * <br> ----- | 1-7 | |

| RECHERCHIERTE SACHGEBIETE (Int.Cl.6) |
|---|
| C08K <br> C08J |

Der vorliegende Recherchenbericht wurde für alle Patentansprüche erstellt

| Recherchenort | Abschlußdatum der Recherche | Prüfer |
|---|---|---|
| DEN HAAG | 19.September 1995 | Siemens, T |

EPO FORM 1503 03.82 (P04C03)